# EUROPÄISCHE PATENTSCHRIFT

(11) **EP 2 078 585 B1**
(45) Veröffentlichungstag und Bekanntmachung des Hinweises auf die Patenterteilung: **04.03.2015**
(21) Anmeldenummer: 08000522.6
(22) Anmeldetag: 12.01.2008
(51) Int. Cl.: B23K 26/14

(54) **Maschinelle Vorrichtung zur Montage und/oder zur Demontage einer Laserdüse sowie Laserbearbeitungsmaschine mit einer derartigen maschinellen Vorrichtung**
Mechanical device for assembling and/or disassembling a laser nozzle and laser processing machine with such a device
Dispositif mécanique destiné au montage et/ou au démontage d'une tuyère laser et machine de traitement laser dotée d'un tel dispositif mécanique

(43) Veröffentlichungstag der Anmeldung: 15.07.2009
(73) Patentinhaber: Trumpf Maschinen AG, 6341 Baar (CH)
(72) Erfinder: Erlenmaier, Werner, 70839 Gerlingen (DE); Schmauder, Frank, 72555 Metzingen (DE); Felber,Armin, 8807 Freienbach (CH); Gedeon, Reto, 6331 Hünenberg (CH)
(74) Vertreter: Kohler Schmid Möbus

(56) Entgegenhaltungen:
- EP-A- 1 454 698
- EP-A- 1 602 438
- DE-C1- 10 056 330

## Beschreibung

Die Erfindung betrifft eine maschinelle Vorrichtung zur Montage und/oder zur Demontage einer Laserdüse an einer Düsenaufnahme einer Laserbearbeitungsmaschine zum Bearbeiten von Werkstücken, insbesondere von Blechen,
- mit einem Düsenmagazin, das an einem Düsenhalterträger wenigstens einen Düsenhalter für eine Laserdüse aufweist,
- mit einem Zustellantrieb, mittels dessen der Düsenhalterträger gemeinsam mit dem Düsenhalter mit einer Zustellbewegung bewegbar und dadurch der Düsenhalter in eine Montage- /Demontage-Stellung zustellbar ist sowie
- mit einem Montage- /Demontage-Antrieb, mittels dessen der in die Montage- /Demontage-Stellung zugestellte Düsenhalter mit einer Montage- /Demontage-Bewegung um eine Düsenhalter-Drehachse drehbar ist.

Die Erfindung betrifft des Weiteren eine Laserbearbeitungsmaschine zum Bearbeiten von Werkstücken, insbesondere von Blechen, wobei die Laserbearbeitungsmaschine eine maschinelle Vorrichtung der vorstehenden Art aufweist.

Gattungsgemäßer Stand der Technik ist bekannt aus DE 100 56 330 C1. Diese Druckschrift offenbart eine maschinelle Düsenwechselvorrichtung mit einem Düsenmagazin, das drei Düsenhalter für jeweils eine Laserdüse aufweist. Dabei ist das Düsenmagazin an einem Gestell vorgesehen, das seinerseits über einen elektromotorischen oder pneumatischen Stellantrieb verfügt. Mit Hilfe des Stellantriebes lassen sich die Düsenhalter des Düsenmagazins gegenüber einem Laserbearbeitungskopf einer Laserbearbeitungsmaschine in eine Ein- und Ausschraubstellung bewegen. Befindet sich ein Düsenhalter in der Ein- und Ausschraubstellung, so kann er an dem Laserbearbeitungskopf eine Laserdüse montieren oder demontieren. In beiden Fällen wird der betreffende Düsenhalter mittels eines Schraubantriebes um eine Düsenhalter-Drehachse gedreht. Je nach Drehrichtung schraubt der Düsenhalter an dem Laserbearbeitungskopf eine Laserdüse ein oder aus. Jeder Düsenhalter der vorbekannten Düsenwechselvorrichtung besitzt einen eigenen Schraubantrieb.

Eine kompakt bauende maschinelle Vorrichtung zur Montage und/oder zur Demontage einer Laserdüse sowie eine Laserbearbeitungsmaschine mit einer derart kompakten Vorrichtung bereitzustellen, ist Aufgabe der vorliegenden Erfindung.

Erfindungsgemäß gelöst wird diese Aufgabe durch die maschinelle Vorrichtung gemäß Patentanspruch 1 sowie durch die Laserbearbeitungsmaschine gemäß Patentanspruch 12.

Im Falle der Erfindung dient demnach ein gemeinsamer Antriebsmotor zur Überführung des betreffenden Düsenhalters des Düsenmagazins in eine Montage- /Demontage-Stellung sowie zur Erzeugung der Montage-/Demontage-Bewegung des Düsenhalters. Aufgrund des Verzichts auf separate Antriebsmotoren für beide Funktionen reduziert sich die Baugröße des Antriebes und damit der gesamten erfindungsgemäßen Vorrichtung auf ein Minimum. Entsprechendes gilt für den mit der Antriebskonfiguration verbundenen antriebstechnischen und finanziellen Aufwand. Ermöglicht wird die Verwendung eines einzigen Antriebsmotors für die Zustell- und für die Montage- /Demontage-Bewegung des betreffenden Düsenhalters durch die anspruchsgemäße Kupplung. Aufgrund ihrer Schaltbarkeit kann diese Kupplung eine Antriebsverbindung wahlweise zwischen dem Antriebsmotor und dem Düsenhalterträger ("Zustellzustand" der Kupplung) oder zwischen dem Antriebsmotor und dem in die Montage- /Demontage-Stellung zugestellten Düsenhalter ("Montage- /Demontage-Zustand" der Kupplung) herstellen.

Besondere Ausführungsarten der Erfindung gemäß den Patentansprüchen 1 und 12 ergeben sich aus den abhängigen Patentansprüchen 2 bis 11.

Ausweislich Patentanspruch 2 ist in bevorzugter Ausgestaltung der Erfindung das Düsenmagazin als Revolvermagazin ausgebildet und dementsprechend der Düsenhalterträger des Düsenmagazins als Magazinrevolver ausgeführt und mittels des gemeinsamen Antriebsmotors von Zustellantrieb und Montage- /Demontage-Antrieb um eine Revolver-Drehachse drehbar. Ein derartiges Revolvermagazin bietet die Möglichkeit, eine Mehrzahl von Düsenhaltern mit geringem Platzbedarf unterzubringen und in die jeweils erforderliche Funktionsstellung zu überführen. Ein Revolvermagazin der beschriebenen Art ist demnach einer kompakten Bauweise der gesamten erfindungsgemäßen Vorrichtung in besonderem Maße zuträglich. Gleichwohl sind erfindungsgemäß aber auch andere Magazinbauarten denkbar.

Die schaltbare Kupplung der erfindungsgemäßen Vorrichtung zur Montage und/oder zur Demontage einer Laserdüse kann auf unterschiedliche Art und Weise technisch realisiert sein.

Bevorzugt wird gemäß Patentanspruch 3 eine schaltbare Kupplung mit einem Kupplungselement, welches den Schaltzustand der Kupplung durch seine Position definiert. Zum einen besitzt eine derartige Kupplung die für den betrieblichen Einsatz der erfindungsgemäßen Vorrichtung erforderliche Robustheit und damit eine ausgezeichnete Funktionssicherheit. Außerdem lässt sich die Steuerung des Schaltzustandes der Kupplung mit einem verhältnismäßig geringen steuerungstechnischen Aufwand bewerkstelligen.

Die in Patentanspruch 4 beschriebene Ausführungsform der erfindungsgemäßen Vorrichtung zeichnet sich dadurch aus, dass sich das Kupplungselement der schaltbaren Kupplung unter der Wirkung der auftretenden Rückstellkraft selbsttätig in die jeweilige Ausgangsposition zurückstellt.

Gemäß Patentanspruch 5 ist in weiterer Ausgestaltung der Erfindung vorgesehen, dass die schaltbare Kupplung der erfindungsgemäßen Vorrichtung eine Schalteinrichtung mit einem Schaltelement umfasst, dessen Position den Schaltzustand der Kupplung bestimmt. Ausweislich Patentanspruch 6 wird das Schaltelement der Schalteinrichtung bei dem jeweiligen Schaltvorgang gegen die Wirkung einer Rückstellkraft bewegt.

Die Vorteile der Erfindungsmerkmale nach den Patentansprüchen 5 und 6 ergeben sich entsprechend aus den vorstehenden Ausführungen zu den Patentansprüchen 3 und 4.

Im Falle der Erfindungsbauart gemäß Patentanspruch 7 ist vorteilhafterweise vorgesehen, dass eine Schaltbewegung des Schaltelementes der Schalteinrichtung für die schaltbare Kupplung eine Schaltbewegung des Kupplungselementes der schaltbaren Kupplung bewirkt.

Die in Patentanspruch 8 beschriebene Ausführungsform der erfindungsgemäßen Vorrichtung zeichnet sich dadurch aus, dass der Düsenhalterträger des Düsenmagazins bei in die Montage- /Demontage-Stellung zugestelltem Düsenhalter gegen eine unerwünschte Verlagerung gesichert ist. Dieses Merkmal gewährleistet insbesondere, dass der Düsenhalter bei der von ihm ausgeführten Montage- /Demontage-Bewegung seine Solllage beibehält.

Zur Sicherung des Düsenhalters in der Montage- /Demontage-Stellung dient in Weiterbildung der Erfindung ein Arretierungselement, das mittels eines Arretierungsantriebes in eine Arretierungsstellung und/oder in eine Freigabestellung bewegbar ist (Patentanspruch 9). Der Schaltzustand der Arretierungsvorrichtung wird demnach durch die Position eines Arretierungselementes definiert. Ausweislich Patentanspruch 10 wird die Schaltbewegung des Arretierungselementes der Arretierungsvorrichtung in weiterer vorteilhafter Ausgestaltung der Erfindung gegen die Wirkung einer Rückstellkraft ausgeführt. Auch hinsichtlich der Vorteile der Erfindungsmerkmale nach den Patentansprüchen 9 und 10 kann auf die vorstehenden Ausführungen zu den Patentansprüchen 3 und 4 verwiesen werden.

Im Falle einer weiteren bevorzugten Erfindungsbauart sind das Kupplungselement der schaltbaren Kupplung, das Schaltelement der Schalteinrichtung für die schaltbare Kupplung sowie das Arretierungselement der Arretierungsvorrichtung für den Düsenhalterträger des Düsenmagazins wenigstens zum Teil miteinander antriebsverbunden (Patentanspruch 11).

Diese Antriebsverbindung ermöglicht es, wenigstens zwei der genannten Elemente mit Hilfe eines gemeinsamen Antriebes bzw. eines gemeinsamen Antriebsmotors zu schalten. Die verschiedenen Schaltfunktionen lassen sich folglich mit einem geringen antriebstechnischen und finanziellen Aufwand realisieren. Die Baugröße der Gesamtanordnung wird minimiert.

Nachfolgend wird die Erfindung anhand beispielhafter schematischer Darstellungen näher erläutert. Es zeigen:
- Fig. 1: eine maschinelle Düsenwechselvorrichtung mit einem als Rvolvermagazin ausgebildeten Düsenmagazin, dessen Magazinerevolver eine erste Drehstellung einnimmt,
- Fig. 2: die Anordnung gemäß Figur 1 mit einer zweiten Drehstellung des Magazinrevolvers und einem in eine Montage- /Demontage-Drehstellung zugestellten Düsenhalter,
- Fig. 3: die Anordnung gemäß Figur 2 mit dem in die Montage- /Demontage-Drehstellung zugestellten und aus dem Magazinrevolver ausgehobenen Düsenhalter,
- Fig. 4: den Antrieb der Düsenwechselvorrichtung gemäß den Figuren 1 bis 3 mit einer schaltbaren Kupplung in einem ersten Schaltzustand,
- Fig. 5: die Anordnung gemäß Figur 4 mit einem zweiten Schaltzustand der schaltbaren Kupplung,
- Fig. 6: einen Teil der Anordnung gemäß Figur 5 in vergrößerter Darstellung,
- Fig. 7: eine stark schematisierte Darstellung einer Laserbearbeitungsmaschine mit der maschinellen Düsenwechselvorrichtung gemäß Figur 2 und
- Fig. 8: die Anordnung gemäß Figur 7 mit der maschinellen Düsenwechselvorrichtung in dem Betriebszustand gemäß Figur 3.

Eine in den Abbildungen dargestellte Düsenwechselvorrichtung 1 dient als maschinelle Vorrichtung zur Montage und/oder zur Demontage von Laserdüsen 2 an einer Düsenaufnahme 3, die ihrerseits an einem Laserbearbeitungskopf 4 einer Laserbearbeitungsmaschine 5 vorgesehen ist. An der Laserbearbeitungsmaschine 5 werden bei regulärem Betrieb Bleche mittels eines Laserschneidstrahls geschnitten.

Die Düsenwechselvorrichtung 1 umfasst ein als Revolvermagazin 6 ausgebildetes Düsenmagazin. Ein als Düsenhalterträger fungierender Magazinrevolver 7 ist an einem Gehäuse 8 der Düsenwechselvorrichtung 1 um eine Revolver-Drehachse 9 drehbar gelagert.

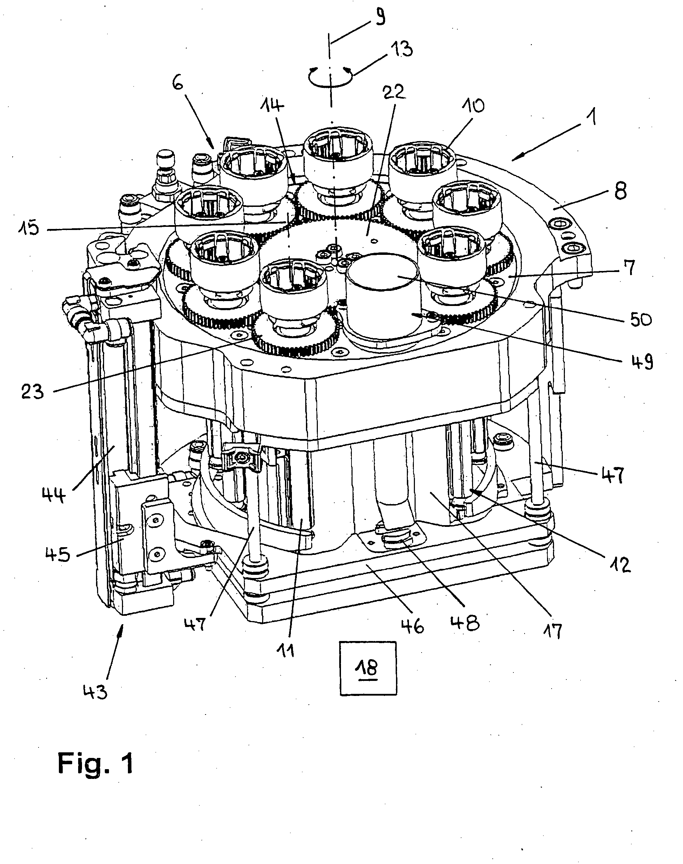

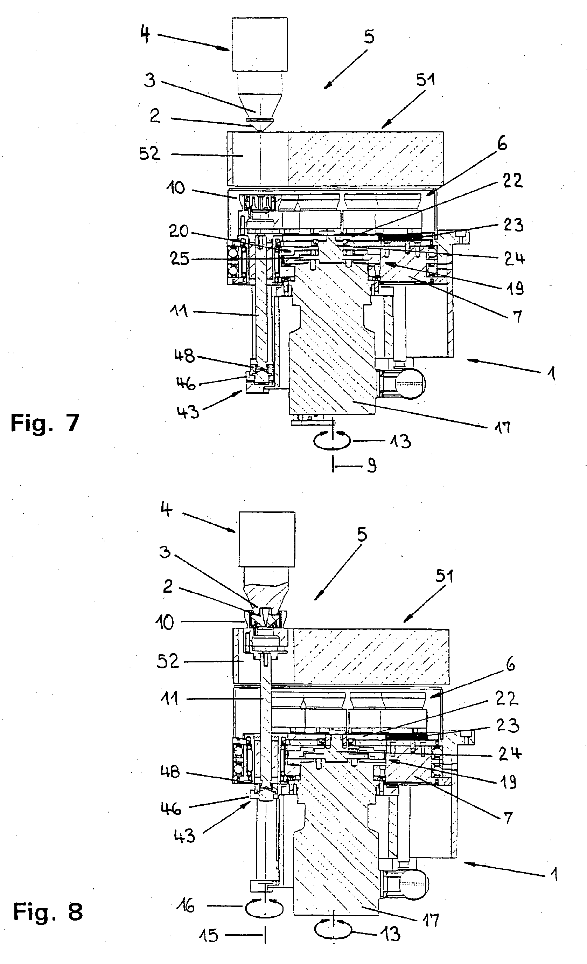

In den Magazinrevolver 7 sind mehrere Düsenhalter 10 eingesetzt. Jeder der Düsenhalter 10 besitzt einen Schaft 11, der nach unten hin über den Magazinrevolver 7 vorsteht und einen von der Kreisform abweichenden Querschnitt besitzt. Aus Gründen der Darstellungsvereinfachung sind die Düsenhalter 10 in den Figuren 1 bis 3 allesamt leer dargestellt. Im betrieblichen Einsatz an der Laserbearbeitungsmaschine 5 (Figuren 7, 8) ist wenigstens einer der Düsenhalter 10 mit einer Laserdüse 2 bestückt.

Mittels eines Zustellantriebes 12 ist der Magazinrevolver 7 in einer durch einen Doppelpfeil 13 veranschaulichten Zustellrichtung um die Revolver-Drehachse 9 zustellbar. Dadurch kann ein beim Wechseln einer Laserdüse 2 an dem Laserbearbeitungskopf 4 eingesetzter Düsenhalter 10 in Zustellrichtung 13 in eine Montage- /Demontage-(Dreh-)Stellung überführt werden.

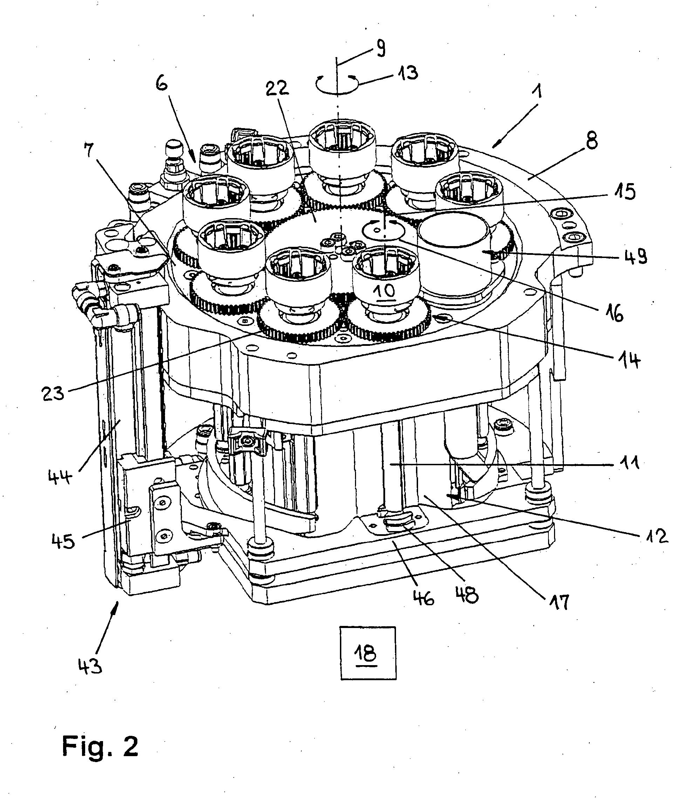

Der in der Montage- /Demontage-Stellung befindliche Düsenhalter 10 wird durch einen Montage- /Demontage-Antrieb 14 um eine Düsenhalter-Drehachse 15 angetrieben. Die Richtung der Montage- /Demontage-Bewegung des betreffenden Düsenhalters 10 ist in Figur 2 durch einen Doppelpfeil 16 dargestellt.

Als gemeinsamer Antriebsmotor des Zustellantriebes 12 sowie des Montage- /Demontage-Antriebes 14 ist ein elektrischer Antriebsmotor 17 vorgesehen, den eine numerische Antriebssteuerung 18 steuert. Die numerische Antriebssteuerung 18 ist bei Einsatz der Düsenwechselvorrichtung 1 als Teil der Laserbearbeitungsmaschine 5 in deren CNC-Steuerung integriert.

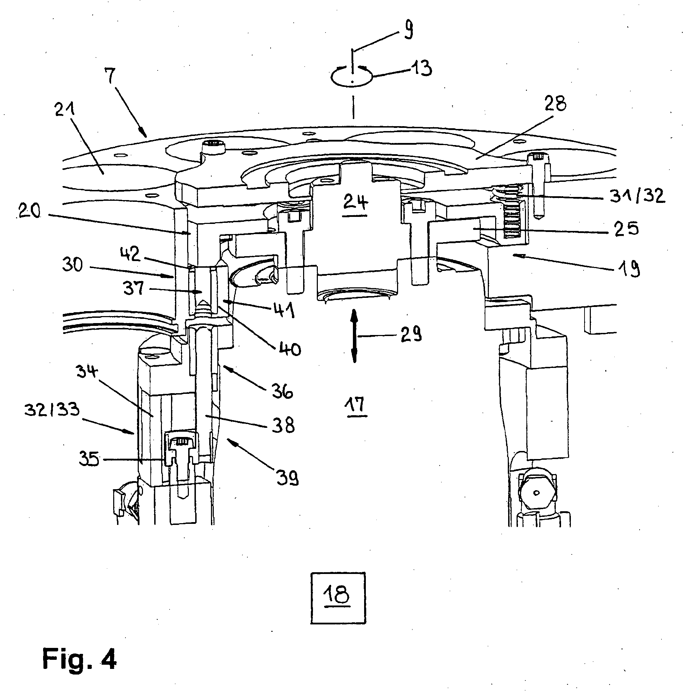

Der Antriebsmotor 17 kann wahlweise den Magazinrevolver 7 mit einer Zustellbewegung um die Revolver-Drehachse 9 bewegen oder den betreffenden Düsenhalter 10 mit einer Montage- /Demontage-Bewegung um die Düsenhalter-Drehachse 15 antreiben. Zu diesem Zweck ist zwischen dem Antriebsmotor 17 einerseits und dem Magazinrevolver 7 sowie den Düsenhaltern 10 andererseits eine schaltbare Kupplung 19 mit einem Kupplungselement in Form einer Kupplungsscheibe 20 vorgesehen. Details der schaltbaren Kupplung 19 sind den Figuren 4 bis 6 zu entnehmen. In diesen Abbildungen ist der Magazinrevolver 7 ohne die Düsenhalter 10 dargestellt. Zu erkennen sind Aufnahmen 21 an dem Magazinrevolver 7, die zur Lagerung der Düsenhalter 10 dienen.

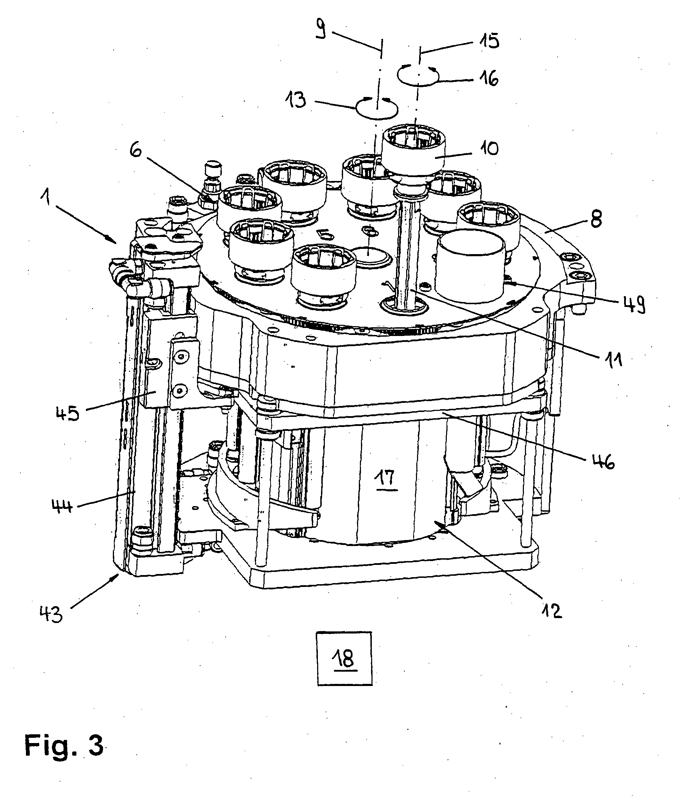

In den Figuren 4 bis 6 gleichfalls nicht gezeigt sind ein Sonnen-Zahnrad 22 sowie Planeten-Zahnräder 23. Diese Elemente des Montage- /Demontage-Antriebes 14 sind in den Figuren 1 und 2 dargestellt. In Figur 3 liegen das Sonnen-Zahnrad 22 und die Planeten-Zahnräder 23 unter einer in den Figuren 1 und 2 nicht abgebildeten Abdeckung.

Das Sonnen-Zahnrad 22 ist drehfest mit einer Motorwelle 24 des Antriebsmotors 17 verbunden. Es kämmt an einer Stirnverzahnung mit zugeordneten Stirnverzahnungen der Planeten-Zahnräder 23. Jedes der Planeten-Zahnräder 23 wird von dem Schaft 11 eines Düsenhalters 10 durchsetzt.

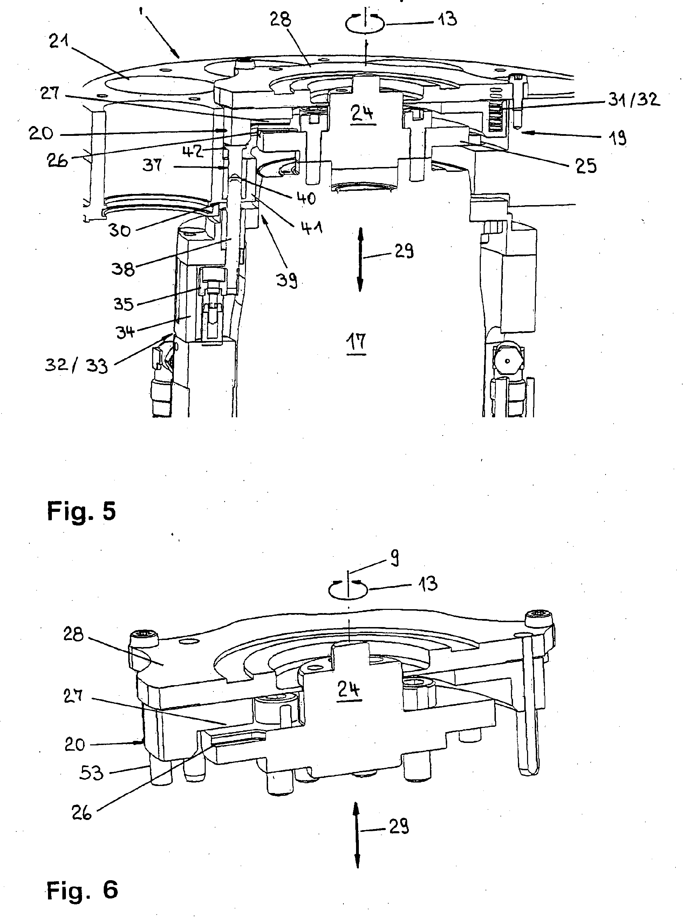

Unterhalb des Sonnen-Zahnrades 22 ist auf der Motorwelle 24 eine Nabe 25 vorgesehen. Die Nabe 25 weist nach oben offene Eingriffe 26 für Kupplungsvorsprünge 27 an der Unterseite der Kupplungsscheibe 20 auf (Figuren 5, 6). Die Kupplungsscheibe 20 ist in einem Zwischenraum zwischen der Nabe 25 und einer mit dem Magazinrevolver 7 verschraubten Getriebeabdeckung 28 in einer Schaltrichtung 29 beweglich. Zur Verlagerung der Kupplungsscheibe 20 in Schaltrichtung 29 dient eine Schalteinrichtung 30. Diese umfasst Rückstellfedern 31, die zwischen der Oberseite der Kupplungsscheibe 20 und der Unterseite der Getriebeabdeckung 28 vorgespannt sind und von denen in den Figuren 4 und 5 eine einzelne zu erkennen ist.

Die Rückstellfedern 31 sind Teil eines Schaltantriebes 32 der Schalteinrichtung 30 für die Kupplungsscheibe 20. Weiterer Bestandteil des Schaltantriebes 32 ist eine pneumatische Hubeinrichtung 33. Diese umfasst einen gehäusefesten Pneumatikzylinder 34 sowie einen in dessen Innern geführten Pneumatikkolben 35. Auch die pneumatische Hubeinrichtung 33 wird durch die numerische Antriebssteuerung 18 gesteuert.

Der Pneumatikkolben 35 der pneumatischen Hubeinrichtung 33 betätigt eine Bolzenanordnung 36. Diese umfasst einen oberen Druckbolzen 37 sowie einen unteren Indexierbolzen 38.

Der Druckbolzen 37 dient als Schaltelement der Schalteinrichtung 30 für die Kupplungsscheibe 20. Der Indexierbolzen 38 bildet ein Arretierungselement einer schaltbaren Arretierungsvorrichtung 39 für den Magazinrevolver 7. In dieser Eigenschaft wirkt der Indexierbolzen 38 mit einer Bolzenaufnahme 40 an einem Innenflansch 41 des Magazinrevolvers 7 zusammen. Die Bolzenaufnahme 40 führt im Übrigen auch den Druckbolzen 37. Mit einem radial überstehenden Bolzenkopf 42 überragt der Druckbolzen 37 die Bolzenaufnahme 40 seitlich.

In den Innenflansch 41 des Magazinrevolvers 7 greift die Kupplungsscheibe 20 mit in Figur 6 erkennbaren Führungszapfen 53 ein. Über die Führungszapfen 53 ist die Kupplungsscheibe 20 an dem Magazinrevolver 7 in Schaltrichtung 29 beweglich geführt. Gleichzeitig stellen die Führungszapfen 53 eine in Zustellrichtung 13 wirksame Formschlussverbindung zwischen der Kupplungsscheibe 20 und dem Magazinrevolver 7 her.

Wie beispielsweise aus den Figuren 1 bis 3 hervorgeht, ist an der Außenseite des Gehäuses 8 der Düsenwechselvorrichtung 1 eine Düsenhalter-Hubvorrichtung 43 vorgesehen, die gleichfalls durch die numerische Antriebssteuerung 18 gesteuert wird. Die Düsenhalter-Hubvorrichtung 43 umfasst einen an dem Gehäuse 8 der Düsenwechselvorrichtung 1 angebrachten Hubzylinder 44, in dessen Innern ein in den Abbildungen nicht sichtbarer Hubkolben in vertikaler Richtung beweglich geführt ist. Ohne Zwischenschaltung einer Kolbenstange ist der Hubkolben mit einem Zwischenstück 45 verbunden, das seinerseits an einer Hubplatte 46 angreift.

Die Hubplatte 46 ist an Führungsstangen 47 des Gehäuses 8 der Düsenwechselvorrichtung 1 in vertikaler Richtung bewegbar geführt. Zwischen den Führungsstangen 47 ist an der Hubplatte 46 eine in Zustellrichtung 13 offene Schaftaufnahme 48 für das freie Ende der Schäfte 11 der Düsenhalter 10 vorgesehen.

In den Figuren 1 bis 3 ist auch eine an dem Magazinrevolver 7 vorgesehene "Blindstation" 49 mit einem holzylinderartigen Durchlass 50 zu erkennen.

An der Laserbearbeitungsmaschine 5 ist die Düsenwechselvorrichtung 1 gemäß den Figuren 7 und 8 an der Unterseite einer Werkstückauflage 51 der Laserbearbeitungsmaschine 5 angeordnet. Die Werkstückauflage 51 weist eine Durchtrittsöffnung 52 auf.

Der in Figur 1 veranschaulichte Betriebszustand der Düsenwechselvorrichtung 1 ist dem regulären Schneidbetrieb der Laserbearbeitungsmaschine 5 zugeordnet. An der Laserbearbeitungsmaschine 5 befindet sich demnach bei regulärem Schneidbetrieb die Blindstation 49 mit dem hohlzylinderartigen Durchlass 50 unterhalb der Durchtrittsöffnung 52 der Werkstückauflage 51. Dieser Betriebszustand der Laserbearbeitungsmaschine 5 ist der Einfachheit halber nicht separat dargestellt.

Schmutzpartikel, insbesondere bei der schneidenden Blechbearbeitung erzeugte Schlacke und Metallspritzer, können die Düsenwechselvorrichtung 1 durch den hohlzylinderartigen Durchlass 50 der Blindstation 49 hindurch unter Schwerkraftwirkung passieren, während die Düsenhalter 10 des Revolvermagazins 6 in einer von der Durchtrittsöffnung 52 der Werkstückauflage 51 abliegenden Position gegen unerwünschte Verschmutzung geschützt sind.

Die schaltbare Kupplung 19 ist in den "Zustellzustand" gemäß Figur 4 geschaltet. Die Kupplungsvorsprünge 27 an der Unterseite der Kupplungsscheibe 20 sind in die Eingriffe 26 an der Oberseite der auf der Motorwelle 24 sitzenden Nabe 25 eingerückt. Die Kupplungsscheibe 20 befindet sich demnach in der "Zustellposition", in welcher sie eine Antriebsverbindung zwischen dem Antriebsmotor 17 und dem Magazinrevolver 7 herstellt.

Ausgehend von den Verhältnissen gemäß Figur 1 wird der Antriebsmotor 17 von der numerischen Antriebssteuerung 18 gesteuert betätigt. Infolge der Antriebsverbindung mit dem Magazinrevolver 7 stellt der Antriebsmotor 17 den Magazinrevolver 7 gemeinsam mit den daran gelagerten Düsenhaltern 10 um die Revolver-Drehachse 9 über einen definierten Drehwinkel in Zustellrichtung 13 zu. Infolgedessen gelangt der leere Düsenhalter 10, welcher der Blindstation 49 an dem Magazinrevolver 7 in Zustellrichtung unmittelbar benachbart ist, in diejenige Position, in welcher zuvor die Blindstation 49 angeordnet war (Figur 2). An der Laserbearbeitungsmaschine 5 liegt der leere Düsenhalter 10 unterhalb der Durchtrittsöffnung 52 der Werkstückauflage 51. Die sich damit an der Laserbearbeitungsmaschine 5 ergebende Situation ist in Figur 7 dargestellt.

Nach wie vor befindet sich die schaltbare Kupplung 19 im Zustellzustand, die Kupplungsscheibe 20 nimmt in Schaltrichtung 29 weiterhin ihre Zustellposition ein. Der zuvor zugestellte leere Düsenhalter 10 ist in die Montage- /Demontage-Stellung bewegt, in welcher er der an dem Laserbearbeitungskopf 4 eingebauten Laserdüse 2 in vertikaler Richtung gegenüber liegt.

Zur Sicherung der Montage- /Demontage-Stellung des leeren Düsenhalters 10 wird nun die Arretierungsvorrichtung 39 numerisch gesteuert betätigt. Im Einzelnen wird der Indexierbolzen 38 der zweiteiligen Bolzenanordnung 36 mittels der als Arretierungsantrieb fungierenden pneumatischen Hubeinrichtung 33 aus der Freigabestellung gemäß Figur 4 in die Arretierungsstellung gemäß Figur 5 angehoben. Aufgrund dieser Hubbewegung läuft der Indexierbolzen 38 in die Bolzenaufnahme 40 an dem Innenflansch 41 des Magazinrevolvers 7 ein. Durch den Formschluss zwischen dem an dem Gehäuse 8 der Düsenwechselvorrichtung 1 abgestützten Indexierbolzen 38 und dem Innenflansch 41 des Magazinrevolvers 7 werden der Magazinrevolver 7 sowie der in die Montage- /Demontage-Stellung zugestellte leere Düsenhalter 10 gegen eine Zustellbewegung um die Revolver-Drehachse 9 gesperrt.

Mit der Betätigung der Arretierungsvorrichtung 39 für den Magazinrevolver 7 geht eine Betätigung der Schalteinrichtung 30 für die Kupplungsscheibe 20 einher. So beaufschlagt der Indexierbolzen 38 beim Einlaufen in die Bolzenaufnahme 40 an dem Innenflansch 41 des Magazinrevolvers 7 das untere Ende des in der Bolzenaufnahme 40 geführten Druckbolzens 37. Insofern bildet der Indexierbolzen 38 auch ein Element der Schalteinrichtung 30 der schaltbaren Kupplung 19. Der Druckbolzen 37 bewegt sich gegen die Wirkung der von den Rückstellfedern 31 über die Kupplungsscheibe 20 ausgeübten Rückstellkraft aus seiner ersten Schaltstellung gemäß Figur 4 in die zweite Schaltstellung gemäß Figur 5. Der Druckbolzen 37 hebt dabei die von den Rückstellfedern 31 beaufschlagte Kupplungsscheibe 20 in ihre Montage- /Demontage-Position an, in welcher die Kupplungsvorsprünge 27 an der Unterseite der Kupplungsscheibe 20 aus den Eingriffen 26 an der Oberseite der Nabe 25 ausgerückt sind. Damit befindet sich die schaltbare Kupplung 19 in ihrem "Montage- /Demontage-Zustand". Der Antriebsmotor 17 ist bei diesem Schaltzustand der schaltbaren Kupplung 19 von dem Magazinrevolver 7 abgekuppelt.

Zeitgleich mit dem Umschalten der schaltbaren Kupplung 19 in den Montage- /Demontage-Zustand wird der in der Montage- /Demontage-Stellung befindliche leere Düsenhalter 10 mittels der Düsenhalter-Hubvorrichtung 43 in die Position gemäß Figur 3 angehoben. Zu diesem Zweck wird die Hubplatte 46 mit Hilfe des Hubzylinders 44 und des darin geführten Hubkolbens nach oben bewegt. Die Hubplatte 46 nimmt dabei den mit seinem freien Ende in der Schaftaufnahme 48 angeordneten Schaft 11 und über diesen den leeren Düsenhalter 10 mit. Der leere Düsenhalter 10 wird aus seiner Lagerung an dem Magazinrevolver 7 ausgehoben. Infolge der Aufwärtsbewegung des leeren Düsenhalters 10 gelangt die Laserdüse 2 an dem Laserbearbeitungskopf 4 in das Innere des Düsenhalters 10.

Alles in allem ergibt sich die in Figur 8 dargestellte Situation. Über die Motorwelle 24, das auf dieser drehfest montierte Sonnen-Zahnrad 22 sowie das den Schaft 11 des nach oben bewegten Düsenhalters 10 mit Formschluss in der Montage- /Demontage-Richtung 16 umschließende Planeten-Zahnrad 23 ist eine Antriebsverbindung zwischen dem Antriebsmotor 17 und dem nach oben bewegten Düsenhalter 10 hergestellt. Wird der Antriebsmotor 17 mit entsprechender Drehrichtung betätigt, so läuft der Düsenhalter 10 um die Düsenhalter-Drehachse 15 mit einer Drehrichtung um, bei welcher der Düsenhalter 10 die zu demontierende Laserdüse 2 an dem Laserbearbeitungskopf 4 mit einer Demontage-Bewegung ausschraubt.

Ist die auszutauschende Laserdüse 2 demontiert, so wird erneut die Düsenhalter-Hubvorrichtung 43 betätigt. Die Hubplatte 46 senkt sich in ihre Ausgangsposition ab. Der mit der gebrauchten Laserdüse 2 belegte Düsenhalter 10 ist dann an dem Magazinrevolver 7 des Revolvermagazins 6 gelagert.

Gleichzeitig mit der Düsenhalter-Hubvorrichtung 43 wird die Schalteinrichtung 30 der schaltbaren Kupplung 19 und damit verbunden die Arretierungsvorrichtung 39 betätigt. Dabei wird der Pneumatikkolben 35 der pneumatischen Hubeinrichtung 33 aus der Position gemäß Figur 5 in die Position gemäß Figur 4 abgesenkt. Der Pneumatikkolben 35 nimmt dabei den Indexierbolzen 38 der zweiteiligen Bolzenanordnung 36 aus der Arretierungsstellung in dem Innenflansch 41 des Magazinrevolvers 7 in die Freigabestellung mit. Die Kupplungsscheibe 20 bewegt sich mit Unterstützung durch die vorgespannten Rückstellfedern 31 nach unten, bis sie an der Nabe 25 zur Auflage kommt und die Kupplungsvorsprünge 27 an der Unterseite der Kupplungsscheibe 20 in die Eingriffe 26 an der Oberseite der Nabe 25 eingerückt sind. Der Druckbolzen 37 wird durch die Kupplungsscheibe 20 in die Bolzenaufnahme 40 an dem Innenflansch 41 des Magazinrevolvers 7 eingeschoben und dadurch in seine erste Schaltstellung zurückbewegt.

Die schaltbare Kupplung befindet sich nun wieder im Zustellzustand, die Kupplungsscheibe 20 nimmt ihre Zustellposition ein. Es ergeben sich damit wieder die Verhältnisse gemäß Figur 4.

Mit einer erneuten Zustellbewegung des Magazinrevolvers 7 durch den Antriebsmotor 17 gelangt ein Düsenhalter 10 mit einer an dem Laserbearbeitungskopf 4 zu montierenden Laserdüse 2 in die Montage- /Demontage-Stellung. In der vorstehend beschriebenen Weise werden nun erneut die Arretierungsvorrichtung 39 für den Magazinrevolver 7 und die Schalteinrichtung 30 für die Kupplungsscheibe 20 betätigt. Dadurch wird der Indexierbolzen 38 wieder in die Arretierungsstellung und die Kupplungsscheibe 20 wieder in die Montage- /Demontage-Position bewegt.

Über die Hubplatte 46 wird der mit der neuen Laserdüse 2 versehene Düsenhalter 10 angehoben, bis die zu montierende Laserdüse 2 mit ihrem Gewinde auf dem Gewinde der Düsenaufnahme 3 an dem Laserbearbeitungskopf 4 stirnseitig aufsetzt. In vertikaler Richtung stützt sich die neue Laserdüse 2 dabei unter Federvorspannung auf dem Rand der Düsenaufnahme 3 an dem Laserbearbeitungskopf 4 ab. Wird nun der Antriebsmotor 17 mit entsprechender Drehrichtung betrieben, so wird über das Sonnen-Zahnrad 22 und das betreffende Planeten-Zahnrad 23 der nach oben angehobene Düsenhalter 10 mit der darin befindlichen Laserdüse 2 mit einer Montage-Bewegung um die Düsenhalter-Drehachse 15 bewegt und die zu montierende Laserdüse 2 wird in die Düsenaufnahme 3 des Laserbearbeitungskopfes 4 eingeschraubt.

Nach Beendigung des Einschraubvorganges werden durch entsprechende Betätigung der Schalteinrichtung 30 der schaltbaren Kupplung 19, der Arretierungsvorrichtung 39 sowie der Düsenhalter-Hubvorrichtung 43 die Verhältnisse gemäß Figur 4 wieder hergestellt. Mittels des Antriebsmotors 17 wird die Blindstation 49 mit dem hohlzylinderartigen Durchlass 50 in die Ausgangsposition gemäß Figur 1 zurückgestellt. An der Laserbearbeitungsmaschine 5 kann nun der reguläre Schneidbetrieb wieder aufgenommen werden.

## Patentansprüche

1. Maschinelle Vorrichtung zur Montage und/oder zur Demontage einer Laserdüse (2) an einer Düsenaufnahme (3) einer Laserbearbeitungsmaschine (5) zum Bearbeiten von Werkstücken, insbesondere von Blechen,
• mit einem Düsenmagazin (6), das an einem Düsenhalterträger (7) wenigstens einen Düsenhalter (10) für eine Laserdüse (2) aufweist,
• mit einem Zustellantrieb (12), mittels dessen der Düsenhalterträger (7) gemeinsam mit dem Düsenhalter (10) mit einer Zustellbewegung bewegbar und dadurch der Düsenhalter (10) in eine Montage- /Demontage-Stellung zustellbar ist sowie
• mit einem Montage- /Demontage-Antrieb (14), mittels dessen der in die Montage- /Demontage-Stellung zugestellte Düsenhalter (10) mit einer Montage- /Demontage-Bewegung um eine Düsenhalter-Drehachse (15) drehbar ist
**dadurch gekennzeichnet, dass**
der Zustellantrieb (12) und der Montage- /Demontage-Antrieb (14) einen gemeinsamen Antriebsmotor (17) aufweisen und dass zwischen dem Antriebsmotor (17) einerseits und dem Düsenhalterträger (7) sowie dem Düsenhalter (10) andererseits eine mittels einer Schalteinrichtung (30) schaltbare Kupplung (19) vorgesehen ist,
• wobei in einem ersten Schaltzustand ("Zustellzustand") der Kupplung (19) zwischen dem Antriebsmotor (17) und dem Düsenhalterträger (7) eine Antriebsverbindung hergestellt ist, aufgrund derer der Düsenhalterträger (7) gemeinsam mit dem Düsenhalter (10) mit einer Zustellbewegung zustellbar ist und
• wobei in einem zweiten Schaltzustand ("Montage- /Demontage-Zustand") der Kupplung (19) zwischen dem Antriebsmotor (17) und dem in die Montage- /Demontage-Stellung zugestellten Düsenhalter (10) eine Antriebsverbindung hergestellt ist, aufgrund derer der Düsenhalter (10) mit einer Montage- /Demontage-Bewegung um die Düsenhalter-Drehachse (15) drehbar ist.

2. Maschinelle Vorrichtung nach Anspruch 1, **dadurch gekennzeichnet, dass** das Düsenmagazin (6) als Revolvermagazin ausgebildet ist und als solches einen Düsenhalterträger (7) in Form eines Magazinrevolvers aufweist, der mittels des gemeinsamen Antriebsmotors (17) von Zustellantrieb (12) und Montage- /Demontage-Antrieb (14) mit einer Zustellbewegung um eine Revolver-Drehachse (9) drehbar ist.

3. Maschinelle Vorrichtung nach einem der vorhergehenden Ansprüche, **dadurch gekennzeichnet, dass** die schaltbare Kupplung (19) ein Kupplungselement (20) umfasst, welches mittels der Schalteinrichtung (30) in eine dem Zustellzustand der Kupplung zugeordnete Position ("Zustellposition") sowie in eine dem Montage- /Demontage-Zustand der Kupplung (19) zugeordnete Position ("Montage/Demontage-Position") bewegbar ist und dass das Kupplungselement (20) in der Zustellposition eine Antriebsverbindung zwischen dem Antriebsmotor (17) und dem Düsenhalterträger (7) und in der Montage- /Demontage-Position eine Antriebsverbindung zwischen dem Antriebsmotor (17) und dem Düsenhalter (10) herstellt.

4. Maschinelle Vorrichtung nach einem der vorhergehenden Ansprüche, **dadurch gekennzeichnet, dass** das Kupplungselement (20) der schaltbaren Kupplung (19) gegen die Wirkung einer Rückstellkraft aus der Zustellposition in die Montage- /Demontage-Position und/oder aus der Montage- /Demontage-Position in die Zustellposition bewegbar ist.

5. Maschinelle Vorrichtung nach einem der vorhergehenden Ansprüche, **dadurch gekennzeichnet, dass** die Schalteinrichtung (30) für die schaltbare Kupplung (19) ein Schaltelement (37) umfasst, welches mittels eines Schaltantriebes (32) in eine dem Zustellzustand der Kupplung (19) zugeordnete erste Schaltstellung und/oder in eine dem Montage- /Demontage-Zustand der Kupplung (19) zugeordnete zweite Schaltstellung bewegbar ist.

6. Maschinelle Vorrichtung nach einem der vorhergehenden Ansprüche, **dadurch gekennzeichnet, dass** das Schaltelement (37) der Schalteinrichtung (30) für die schaltbare Kupplung (19) gegen die Wirkung einer Rückstellkraft aus der ersten Schaltstellung in die zweite Schaltstellung und/oder aus der zweiten Schaltstellung in die erste Schaltstellung bewegbar ist.

7. Maschinelle Vorrichtung nach einem der vorhergehenden Ansprüche, **dadurch gekennzeichnet,**
• **dass** die schaltbare Kupplung (19) ein Kupplungselement (20) umfasst, welches mittels der Schalteinrichtung (30) in eine dem Zustellzustand der Kupplung (19) zugeordnete Position ("Zustellposition") sowie in eine dem Montage- /Demontage-Zustand der Kupplung (19) zugeordnete Position ("Montage- /Demontage-Position") bewegbar ist,
• **dass** das Kupplungselement (20) in der Zustellposition eine Antriebsverbindung zwischen dem Antriebsmotor (17) und dem Düsenhalterträger (7) und in der Montage- /Demontage-Position eine Antriebsverbindung zwischen dem Antriebsmotor (17) und dem Düsenhalter (10) herstellt,
• **dass** die Schalteinrichtung (30) für die schaltbare Kupplung (19) ein Schaltelement (37) umfasst, welches mittels eines Schaltantriebes (32) in eine dem Zustellzustand der Kupplung (19) zugeordnete erste Schaltstellung und/oder in eine dem Montage-/Demontage-Zustand der Kupplung (19) zugeordnete zweite Schaltstellung bewegbar ist,
• wobei mittels des in die erste Schaltstellung bewegten Schaltelementes (37) der Schalteinrichtung (30) für die schaltbare Kupplung (19) das Kupplungselement (20) der schaltbaren Kupplung (19) in die Zustellposition bewegbar ist und
• wobei mittels des in die zweite Schaltstellung bewegten Schaltelements (37) der Schalteinrichtung (30) für die schaltbare Kupplung (19) das Kupplungselement (20) der schaltbaren Kupplung (19) in die Montage- /Demontage-Position bewegbar ist.

8. Maschinelle Vorrichtung nach einem der vorhergehenden Ansprüche, **dadurch gekennzeichnet, dass** der Düsenhalterträger (7) des Düsenmagazins (6) bei in die Montage- /Demontage-Stellung zugestelltem Düsenhalter (10) mittels einer schaltbaren Arretierungsvorrichtung (39) gegen Ausführen einer Zustellbewegung arretierbar ist.

9. Maschinelle Vorrichtung nach einem der vorhergehenden Ansprüche, **dadurch gekennzeichnet, dass** die schaltbare Arretierungsvorrichtung (39) für den Düsenhalterträger (7) des Düsenmagazins (6) ein Arretierungselement (38) umfasst, welches mittels eines Arretierungsantriebes (33) in eine Arretierungsstellung und/oder in eine Freigabestellung bewegbar ist, wobei das Arretierungselement (38) den Düsenhalterträger (7) in der Arretierungsstellung gegen Ausführen einer Zustellbewegung arretiert und in der Freigabestellung zur Ausführung einer Zustellbewegung frei gibt.

10. Maschinelle Vorrichtung nach einem der vorhergehenden Ansprüche, **dadurch gekennzeichnet, dass** das Arretierungselement (38) der Arretierungsvorrichtung (39) für den Düsenhalterträger (7) des Düsenmagazins (6) gegen die Wirkung einer Rückstellkraft aus der Arretierungsstellung in die Freigabestellung und/oder aus der Freigabestellung in die Arretierungsstellung bewegbar ist.

11. Maschinelle Vorrichtung nach einem der vorhergehenden Ansprüche, **dadurch gekennzeichnet, dass** von dem Kupplungselement (20) der schaltbaren Kupplung (19), dem Schaltelement (37) der Schalteinrichtung (30) für die schaltbare Kupplung (19) und dem Arretierungselement (38) der Arretierungsvorrichtung (39) für den Düsenhalterträger (7) des Düsenmagazins (6) wenigstens zwei Elemente miteinander antriebsverbunden sind.

12. Laserbearbeitungsmaschine zum Bearbeiten von Werkstücken, insbesondere von Blechen, mit einer Düsenaufnahme (3) für eine Laserdüse (2), **gekennzeichnet durch** eine maschinelle Vorrichtung (1) nach einem der Ansprüche 1 bis 11 zur Montage und/oder zur Demontage einer Laserdüse (2) an der Düsenaufnahme (3).

## Claims

1. Mechanical device for assembly and/or disassembly of a laser nozzle (2) on a nozzle receiving member (3) of a laser processing machine (5) for processing workpieces, in particular metal sheets,
• having a nozzle magazine (6) which has on a nozzle retention member carrier (7) at least one nozzle retention member (10) for a laser nozzle (2),
• having a positioning drive (12) by means of which the nozzle retention member carrier (7) can be moved with the nozzle retention member (10) thus performing a positioning movement and the nozzle retention member (10) can thereby be positioned in an assembly/disassembly position, and
• having an assembly/disassembly drive (14) by means of which the nozzle retention member (10) which is positioned in the assembly/disassembly position can be rotated with an assembly/disassembly movement about a nozzle retention member rotation axis (15),
**characterised in that**
the positioning drive (12) and the assembly/disassembly drive (14) have a common drive motor (17) and **in that** between the drive motor (17), on the one hand, and the nozzle retention member carrier (7) and the nozzle retention member (10), on the other hand, a coupling (19) which can be switched by means of a switching device (30) is provided,
• there being produced in a first switching state ("positioning state") of the coupling (19) between the drive motor (17) and the nozzle retention member carrier (7) a drive connection based on which the nozzle retention member carrier (7) can be positioned with the nozzle retention member (10) thus performing a positioning movement and
• there being produced in a second switching state ("assembly/disassembly state") of the coupling (19) between the drive motor (17) and the nozzle retention member (10) which is positioned in the assembly/disassembly position a drive connection based on which the nozzle retention member (10) can be rotated with an assembly/disassembly movement about the nozzle retention member rotation axis (15).

2. Mechanical device according to claim 1, **characterised in that** the nozzle magazine (6) is constructed as a turret magazine and as such has a nozzle retention member carrier (7) in the form of a magazine turret which by means of the common drive motor (17) of the positioning drive (12) and assembly/disassembly drive (14) can be rotated about a turret rotation axis (9) with a positioning movement.

3. Mechanical device according to either of the preceding claims, **characterised in that** the switchable coupling (19) comprises a coupling element (20) which can be moved by means of the switching device (30) into a position ("positioning position") which is associated with the positioning state of the coupling and into a position ("assembly/disassembly position") which is associated with the assembly/disassembly state of the coupling (19) and **in that** the coupling element (20) produces in the positioning position a drive connection between the drive motor (17) and the nozzle retention member carrier (7) and in the assembly/disassembly position a drive connection between the drive motor (17) and the nozzle retention member (10).

4. Mechanical device according to any one of the preceding claims, **characterised in that** the coupling element (20) of the switchable coupling (19) can be moved counter to the action of a restoring force from the positioning position into the assembly/disassembly position and/or from the assembly/disassembly position into the positioning position.

5. Mechanical device according to any one of the preceding claims, **characterised in that** the switching device (30) for the switchable coupling (19) comprises a switching element (37) which can be moved by means of a switching drive (32) into a first switching position associated with the positioning state of the coupling (19) and/or into a second switching position associated with the assembly/disassembly state of the coupling (19).

6. Mechanical device according to any one of the preceding claims, **characterised in that** the switching element (37) of the switching device (30) for the switchable coupling (19) can be moved counter to the action of a restoring force from the first switching position into the second switching position and/or from the second switching position into the first switching position.

7. Mechanical device according to any one of the preceding claims, **characterised in that**
• the switchable coupling (19) comprises a coupling element (20), which can be moved by means of the switching device (30) into a position ("positioning position") which is associated with the positioning state of the coupling (19) and into a position ("assembly/disassembly position") which is associated with the assembly/disassembly state of the coupling (19),
• **in that** the coupling element (20) produces in the positioning position a drive connection between the drive motor (17) and the nozzle retention member carrier (7) and in the assembly/disassembly position a drive connection between the drive motor (17) and the nozzle retention member (10),
• **in that** the switching device (30) for the switchable coupling (19) comprises a switching element (37) which can be moved by means of a switching drive (32) into a first switching position associated with the positioning state of the coupling (19) and/or into a second switching position associated with the assembly/disassembly state of the coupling (19),
• the coupling element (20) of the switchable coupling (19) being able to be moved into the positioning position by means of the switching element (37) of the switching device (30) for the switchable coupling (19), which switching element has been moved into the first switching position and
• the coupling element (20) of the switchable coupling (19) being able to be moved into the assembly/disassembly position by means of the switching element (37) of the switching device (30) for the switchable coupling (19), which switching element has been moved into the second switching position.

8. Mechanical device according to any one of the preceding claims, **characterised in that** the nozzle retention member carrier (7) of the nozzle magazine (6), when the nozzle retention member (10) has been positioned in the assembly/disassembly position, can be secured by means of a switchable securing device (39) against carrying out a positioning movement.

9. Mechanical device according to any one of the preceding claims, **characterised in that** the switchable securing device (39) for the nozzle retention member carrier (7) of the nozzle magazine (6) comprises a securing element (38) which can be moved by means of a securing drive (33) into a securing position and/or into a release position, the securing element (38) securing the nozzle retention member carrier (7) in the securing position against carrying out a positioning movement and releasing it in the release position to carry out a positioning movement.

10. Mechanical device according to any one of the preceding claims, **characterised in that** the securing element (38) of the securing device (39) for the nozzle retention member carrier (7) of the nozzle magazine (6) can be moved counter to the action of a restoring force from the securing position into the release position and/or from the release position into the securing position.

11. Mechanical device according to any one of the preceding claims, **characterised in that**, of the coupling element (20) of the switchable coupling (19), the switching element (37) of the switching device (30) for the switchable coupling (19) and the securing element (38) of the securing device (39) for the nozzle retention member carrier (7) of the nozzle magazine (6), at least two elements are connected to each other in terms of driving.

12. Laser processing machine for processing workpieces, in particular metal sheets, having a nozzle receiving member (3) for a laser nozzle (2), **characterised by** a mechanical device (1) according to any one of claims 1 to 11, for assembling and/or disassembling a laser nozzle (2) on the nozzle receiving member (3).

## Revendications

1. Dispositif mécanique affecté au montage et/ou au démontage d'une buse de laser (2) au niveau d'un logement (3) de buses d'une machine (5) d'usinage au laser dévolue à l'usinage de pièces, notamment de tôles, comprenant
• un magasin (6) à buses comportant, sur un support (7) de porte-buses, au moins un porte-buses (10) dédié à une buse de laser (2),
• un entraînement de positionnement (12) au moyen duquel le support (7) de porte-buses peut être animé d'un mouvement de positionnement, conjointement au porte-buses (10), de sorte que ledit porte-buses (10) peut être présenté à une position de montage/démontage,
• ainsi qu'un entraînement (14) de montage/démontage au moyen duquel le porte-buses (10), présenté à la position de montage/démontage, peut être animé d'une rotation autour d'un axe de rotation (15) dudit porte-buses, en effectuant un mouvement de montage/démontage,
**caractérisé par le fait que**
l'entraînement de positionnement (12) et l'entraînement (14) de montage/démontage sont équipés d'un moteur d'entraînement (17) commun ; et **par le fait qu'**un accouplement (19), pouvant être commuté au moyen d'un dispositif de commutation (30), est prévu entre ledit moteur d'entraînement (17), d'une part, et le support (7) de porte-buses et le porte-buses (10), d'autre part,
• sachant qu'il est instauré dans un premier état commuté ("état de présentation") de l'accouplement (19), entre le moteur d'entraînement (17) et le support (7) de porte-buses, une liaison d'entraînement sur la base de laquelle ledit support (7) de porte-buses peut être présenté en effectuant un mouvement de positionnement, conjointement au porte-buses (10), et
• sachant qu'il est instauré dans un second état commuté ("état de montage/démontage") dudit accouplement (19), entre ledit moteur d'entraînement (17) et ledit porte-buses (10) présenté à la position de montage/démontage, une liaison d'entraînement sur la base de laquelle ledit porte-buses (10) peut tourner autour de l'axe de rotation (15) dudit porte-buses, en effectuant un mouvement de montage/démontage.

2. Dispositif mécanique selon la revendication 1, **caractérisé par le fait que** le magasin (6) à buses est réalisé sous la forme d'un magasin rotatif et comporte, en tant que tel, un support (7) de porte-buses qui revêt la forme d'une tourelle d'alimentation pouvant être tournée, au moyen du moteur d'entraînement (17) commun de l'entraînement de positionnement (12) et de l'entraînement (14) de montage/démontage, en effectuant un mouvement de positionnement autour d'un axe de rotation (9) de ladite tourelle.

3. Dispositif mécanique selon l'une des revendications précédentes, **caractérisé par le fait que** l'accouplement commutable (19) inclut un élément d'accouplement (20) pouvant être mû, au moyen du dispositif de commutation (30), à une position associée à l'état de présentation de l'accouplement ("position de présentation"), ainsi qu'à une position associé à l'état de montage/démontage dudit accouplement (19) ("position de montage/démontage") ; et **par le fait que** ledit élément d'accouplement (20) instaure, à ladite position de présentation, une liaison d'entraînement entre le moteur d'entraînement (17) et le support (7) de porte-buses et, à ladite position de montage/démontage, une liaison d'entraînement entre ledit moteur d'entraînement (17) et le porte-buses (10).

4. Dispositif mécanique selon l'une des revendications précédentes, **caractérisé par le fait que** l'élément d'accouplement (20) de l'accouplement commutable (19) peut être mû, en opposition à une force de rappel, de la position de présentation à la position de montage/démontage et/ou de ladite position de montage/démontage à ladite position de présentation.

5. Dispositif mécanique selon l'une des revendications précédentes, **caractérisé par le fait que** le dispositif de commutation (30), dédié à l'accouplement commutable (19), inclut un élément de commutation (37) qui peut être mû, au moyen d'un entraînement sélecteur (32), à une première position de commutation associée à l'état de présentation de l'accouplement (19) et/ou à une seconde position de commutation associée à l'état de montage/démontage dudit accouplement (19).

6. Dispositif mécanique selon l'une des revendications précédentes, **caractérisé par le fait que** l'élément de commutation (37) du dispositif de commutation (30) dédié à l'accouplement commutable (19) peut être mû, en opposition à une force de rappel, de la première position de commutation à la seconde position de commutation et/ou de ladite seconde position de commutation à ladite première position de commutation.

7. Dispositif mécanique selon l'une des revendications précédentes, **caractérisé par le fait**
• **que** l'accouplement commutable (19) inclut un élément d'accouplement (20) pouvant être mû, au moyen du dispositif de commutation (30), à une position associée à l'état de présentation de l'accouplement (19) ("position de présentation"), ainsi qu'à une position associée à l'état de montage/démontage dudit accouplement (19) ("position de montage/démontage"),
• **que** ledit élément d'accouplement (20) instaure, à ladite position de présentation, une liaison d'entraînement entre le moteur d'entraînement (17) et le support (7) de porte-buses et, à ladite position de montage/démontage, une liaison d'entraînement entre ledit moteur d'entraînement (17) et le porte-buses (10),
• **que** le dispositif de commutation (30), dédié à l'accouplement commutable (19), inclut un élément de commutation (37) qui peut être mû, au moyen d'un entraînement sélecteur (32), à une première position de commutation associée à l'état de présentation de l'accouplement (19) et/ou à une seconde position de commutation associée à l'état de montage/démontage dudit accouplement (19),
• sachant que l'élément d'accouplement (20) de l'accouplement commutable (19) peut être mû à la position de présentation au moyen de l'élément de commutation (37), amené à la première position de commutation, du dispositif de commutation (30) dédié à l'accouplement commutable (19), et
• sachant que ledit élément d'accouplement (20) dudit accouplement commutable (19) peut être mû à la position de montage/démontage au moyen dudit élément de commutation (37), amené à la seconde position de commutation, dudit dispositif de commutation (30) dédié audit accouplement commutable (19).

8. Dispositif mécanique selon l'une des revendications précédentes, **caractérisé par le fait que**, lorsque le porte-buses (10) est présenté à la position de montage/démontage, le support (7) de porte-buses du magasin (6) à buses peut être arrêté, au moyen d'un dispositif d'arrêt (39) commutable, en étant empêché d'effectuer un mouvement de positionnement.

9. Dispositif mécanique selon l'une des revendications précédentes, **caractérisé par le fait que** le dispositif d'arrêt (39) commutable, dédié au support (7) de porte-buses du magasin (6) à buses, inclut un élément d'arrêt (38) pouvant être mû à une position d'arrêt et/ou à une position de libération, au moyen d'un entraînement d'arrêt (33), ledit élément d'arrêt (38) bloquant ledit support (7) de porte-buses dans ladite position d'arrêt, en l'empêchant d'effectuer un mouvement de positionnement, et libérant ledit support dans ladite position de libération, en vue de l'exécution d'un mouvement de positionnement.

10. Dispositif mécanique selon l'une des revendications précédentes, **caractérisé par le fait que** l'élément d'arrêt (38) du dispositif d'arrêt (39) dédié au support (7) de porte-buses du magasin (6) à buses peut être mû, en opposition à une force de rappel, de la position d'arrêt à la position de libération et/ou de ladite position de libération à ladite position d'arrêt.

11. Dispositif mécanique selon l'une des revendications précédentes, **caractérisé par le fait qu'**au sein de l'élément d'accouplement (20) de l'accouplement commutable (19), de l'élément de commutation (37) du dispositif de commutation (30) dédié audit accouplement commutable (19), et de l'élément d'arrêt (38) du dispositif d'arrêt (39) dédié au support (7) de porte-buses du magasin (6) à buses, au moins deux éléments sont en liaison mutuelle d'entraînement.

12. Machine d'usinage au laser dévolue à l'usinage de pièces, notamment de tôles, munie d'un logement (3) de buses dédié à une buse de laser (2), **caractérisée par** un dispositif mécanique (1) conforme à l'une des revendications 1 à 11, affecté au montage et/ou au démontage d'une buse de laser (2) au niveau du logement (3) de buses.
